# EUROPÄISCHE PATENTSCHRIFT

(11) **EP 2 580 494 B1**
(45) Veröffentlichungstag und Bekanntmachung des Hinweises auf die Patenterteilung: **27.01.2016**
(21) Anmeldenummer: 11720043.6
(22) Anmeldetag: 17.05.2011
(51) Int. Cl.: F16H 59/20

(54) **VERFAHREN ZUR EINSTELLUNG VON SCHALTPUNKTEN IN EINEM GETRIEBE ODER ZUR ERHÖHUNG DES DREHMOMENTS EINER ELEKTRISCHEN ANTRIEBSMASCHINE**
METHOD FOR SETTING SHIFT POINTS IN A TRANSMISSION OR FOR INCREASING THE TORQUE OF AN ELECTRIC DRIVE MACHINE
PROCÉDÉ POUR LE RÉGLAGE DE POINTS DE CHANGEMENT DE VITESSE DANS UNE BOÎTE DE VITESSES OU POUR AUGMENTER LE COUPLE D'UN MOTEUR D'ENTRAÎNEMENT ÉLECTRIQUE

(30) Priorität: 10.06.2010 DE 102010023316
(43) Veröffentlichungstag der Anmeldung: 17.04.2013
(73) Patentinhaber: Voith Patent GmbH, 89522 Heidenheim (DE)
(72) Erfinder: DIETZEL, Bernd, 89428 Syrgenstein (DE)
(86) Internationale Anmeldenummer: PCT/EP2011/002426
(87) Internationale Veröffentlichungsnummer: WO 2011/154082

(56) Entgegenhaltungen:
- EP-A2- 1 318 334
- DE-A1- 3 615 961
- DE-A1- 10 208 206
- DE-A1- 19 818 031
- US-A1- 2007 105 691

## Beschreibung

Die Erfindung betrifft ein Verfahren zur Einstellung von Schaltpunkten in einem automatisierten Schaltgetriebe oder einem Automatikgetriebe eines durch einen Motor angetriebenen Fahrzeugs, wobei die Schaltpunkte durch Aktivieren einer Kick-down-Funktion zu höheren Motordrehzahlen hin verschiebbar sind. Unter automatisierten Schaltgetrieben werden diejenigen Getriebe verstanden, bei welchen das Einlegen eines Ganges sowie das Öffnen und Schließen der Kupplung nicht durch den Fahrer, sondern durch geeignete Aktoren erfolgt. Das erfindungsgemäße Verfahren kann in nur durch einen Verbrennungsmotor angetriebenen Fahrzeugen aber auch in anderen Fahrzeugen, insbesondere in Fahrzeugen, die durch Verbrennungsmotoren aber auch Elektromotoren - beispielsweise in Hybridfahrzeugen - angetrieben werden, eingesetzt werden. Bei letzteren betrifft die Erfindung zudem ein Verfahren zur Erhöhung des Drehmomentes eines solchen Elektromotors zum Antrieb des Hybridfahrzeugs.

Vorliegend ist unter Kick-down-Funktion die Verschiebung von Hochschalt- sowie Rückschaltpunkten zu höheren Motordrehzahlen nach Anforderung eines Leistungswunsches des Fahrers durch Betätigen eines Fahrpedals, insbesondere im Bereich der Volllaststellung des Fahrpedals (Vollgas) und/oder einer zusätzlichen Betätigung eines Schalters zur Aktivierung der Kick-down-Funktion, gemeint. Bei einem Hybridfahrzeug kann ferner die Kick-down-Funktion die Erhöhung des Drehmomentes der elektrischen Antriebsmaschine nach einer entsprechenden Anforderung eines Leistungswunsches des Fahrers bewirken, insbesondere indem mittels der elektrischen Antriebsmaschine ein zusätzliches Drehmoment oder erhöhtes zusätzliches Drehmoment zu dem Drehmoment eines Verbrennungsmotors, mittels welchem das Hybridfahrzeug angetrieben wird, zur Verfügung gestellt wird (Parallelhybrid) oder indem das Drehmoment der elektrischen Antriebsmaschine als einziges das Fahrzeug antreibende Drehmoment erhöht wird (serieller Hybrid).

Moderne Automatikgetriebe sollen den Fahrer bei der Wahl der Gänge unterstützen und seine Aufmerksamkeit soweit wie möglich weg vom ablenkenden manuellen Einlegen eines Ganges hin auf das Verkehrsgeschehen lenken, indem der Gangwechsel weitestgehend automatisch erfolgt. Der Fahrer hat hierdurch jedoch nur einen geringen Einfluss auf den direkt zu schaltenden Gang. Besonders in Gefahrensituationen muss jedoch sichergestellt werden, dass der aktuelle Gang auch der aktuell vom Fahrer angeforderten Fahrzeugleistung beziehungsweise -beschleunigung entspricht. Beispielsweise bei Überholvorgängen muss die vom Fahrer angeforderte Leistung in Form einer Erhöhung der Zugkraft beziehungsweise der Fahrzeugbeschleunigung erfolgen. Dies wird dadurch erreicht, dass bei Anforderung erhöhter Fahrzeugbeschleunigung durch den Fahrer die Getriebesteuerung derart agiert, dass der vor dem Überholvorgang eingelegte Gang entweder länger ausgefahren wird, die Hochschaltpunkte des Getriebes zu höheren Drehzahlen (hochtourig) verschoben werden oder der aktuell eingelegte Gang vermindert wird, um ein höheres Drehmoment an den Fahrzeugrädern und somit eine größere Fahrzeugbeschleunigung zu erreichen.

Die Verschiebung der Schaltpunkte durch Aktiveren der Kick-down-Funktion zu höheren Motordrehzahlen bringt einen erhöhten Kraftstoffverbrauch mit sich, da mehr Leistung vom Motor angefordert wird. Weiterhin setzt die Kick-down-Funktion jegliche - meist von der Getriebesteuerung - angewendeten Kraftstoffsparmaßnahmen wie beispielsweise eine Fahrstilanpassung des Fahrzeugführers, Sparschaltprogramme und Beschleunigungsgrenzen mindestens für die Dauer der Kick-down-Funktion aus. Das Aussetzen dieser Kraftstoffsparmaßnahmen wird in erster Linie zugunsten der Fahrsicherheit angewendet, um bei Gefahr eine höhere Beschleunigung des Fahrzeugs zu gewährleisten, beispielsweise dann, wenn sich der Fahrer beim Überholvorgang überschätzt hat und das Fahrpedal auf Volllast betätigt. Aus diesem Grund ist die Kick-down-Funktion unentbehrlich. Entsprechendes gilt auch für die Kick-down-Funktion von Hybridfahrzeugen, mittels welcher zusätzliches Drehmoment der elektrischen Antriebsmaschine zur Verfügung gestellt wird.

Jedoch wird die Kick-down-Funktion entsprechend den bisherigen Automatikgetrieben beziehungsweise Hybridantrieben auch dann bereitgestellt, wenn keine oder weniger gefährliche Situationen vorliegen, also beispielsweise bei Anfahrvorgängen. Besonders nachteilig wirkt sich dies bei einer hektischen Fahrweise des Fahrzeuglenkers aus, nämlich wenn dieser ständig und besonders in niedrigen Gängen das Fahrpedal vermehrt in Folge und dann vollständig bis zur Volllaststellung (Vollgas) durchdrückt.

Besonders gravierend wirken sich diese Nachteile auf Fahrzeuge des öffentlichen Nahverkehrs, wie beispielsweise Linienbusse aus. Beispielsweise führen häufige Anfahr- und Beschleunigungsvorgänge, insbesondere im Berufsverkehr zu einer teils ungewollten Aktivierung der Kick-down-Funktion durch den Fahrer, so dass meist streckenprofilabhängige Sparschaltprogramme deaktiviert werden. Neben dem erhöhten Kraftstoffverbrauch steigen auch die Abgasemissionen dementsprechend hoch an, was besonders beim Einsatz derartiger Fahrzeuge in Innenstädten problematisch ist.

Aus der DE 602 09 622 T2 ist eine Schaltsteuervorrichtung für ein stufenloses Getriebe bekannt, bei der die Kick-down-Funktion immer dann aktiviert wird, wenn die Fahrpedalstellung einen Schwellenwert überschreitet. Der Schwellenwert wird dabei dynamisch in Abhängigkeit beispielsweise der Fahrbahnneigung und der Fahrpedalstellung vorgegeben, wobei die Kick-down-Funktion erst ab einer bestimmten Fahrpedalstellung, die den Schwellenwert überschreitet, aktiviert wird. So wird beispielsweise bei einer bevorstehenden Steigung der Schwellenwert zur Aktivierung der Kick-down-Funktion vergrößert, sodass das Fahrpedal "weiter" durchgedrückt werden muss, als dies der Fall auf ebener Strecke ist, um die Kick-down-Funktion zu aktivieren. Eine strickte Abschaltung der Kick-down-Funktion ist jedoch nicht vorgesehen. So wird diese beispielsweise bei vollständigem Durchdrücken des Fahrpedals in die Volllaststellung immer aktiviert. Dies geht wiederum mit den vorangehend beschriebenen Nachteilen einher.

Eine weitere Möglichkeit ist, die Kick-down-Funktion softwaremäßig abzuschalten, beispielsweise durch die Veränderung der Parameter für eine Aktivierung der Kick-down-Funktion. Eine solche Umparametrisierung setzt jedoch die Zuverlässigkeit der Kick-down-Funktion im Betrieb herab, was zu einer Deaktivierung in einer Gefahrensituation führen kann. Eine strikte Abschaltung der Kick-down-Funktion ist deshalb weder ratsam noch erwünscht.

Die gattungsgemäße DE 198 18 031 A1 beschreibt ein Verfahren zum Einstellen von Schaltpunkten in einem automatischen Getriebe, wobei in Abhängigkeit eines Schwellwerts, welcher eine Fahrpedalstellung angibt, die Kick-down-Funktion aktiviert wird und unterhalb dieses deaktiviert bleibt. Der Schwellwert wird dabei in Abhängigkeit von Umgebungsbedingungen des Fahrzeugs gewählt. So ist der Schwellwert beispielsweise bei einer Bergauffahrt in Richtung der Vollgasstellung verschoben, sodass der Fahrer das Fahrpedal nahezu vollständig durchdrücken muss, um die Kick-down-Funktion zu aktivieren. Das bedeutet wiederum, dass die Kick-down-Funktion in Abhängigkeit der Fahrpedalstellung aktiviert wird, wobei zusätzlich herausgestellt wird, dass dem Fahrerwunsch stets Priorität eingeräumt wird, sodass der Fahrer tatsächlich selbst bestimmen kann, ob die Kick-down-Funktion aktiviert wird.

Eine Aktivierung der Kick-down-Funktion gemäß der DE 198 18 031 A1 erfolgt in jeglichem Gang entsprechend dem Fahrerwunsch zumindest insoweit, dass die Getriebeschaltpunkte zu höheren Motordrehzahlen verschoben werden, sodass eine spätere Hochschaltung in den nächsten Gang erfolgt, wohingegen natürlich ein Herunterschalten im ersten Gang nicht erfolgen kann.

DE 36 15 961 A1 offenbart die Erfassung der aktuellen Stellung des Fahrpedals indirekt durch eine Drosselklappenstellung sowie die Winkelstellung des Lenkrads und das Aktivieren der Kick-down-Funktion in Abhängigkeit beider Stellungen.

Zum weiteren Stand der Technik wird auf die EP 1 318 334 A2 und US 2007/105691 A1 verwiesen.

Der Erfindung liegt die Aufgabe zugrunde, ein Verfahren zur Einstellung von Schaltpunkten in einem automatisierten Schaltgetriebe oder einem Automatikgetriebe eines durch einen Motor angetriebenen Fahrzeugs anzugeben, welches die Nachteile des Standes der Technik vermeidet. Insbesondere soll mit dem Verfahren eine Einsparung von Kraftstoff, die Vermeidung von erhöhten Abgasemissionen bei gleichzeitiger Erhöhung der Fahrsicherheit durch Gewährleistung der Bereitstellung der Kick-down-Funktion in Gefahrensituationen in Abhängigkeit des Betriebszustands des Fahrzeugs sowie eine optimale Einstellung der Schaltpunkte gewährleistet werden.

Ferner soll für ein Hybridfahrzeug ein Verfahren zur Erhöhung des Drehmomentes einer elektrischen Antriebsmaschine mittels einer Kick-down-Funktion angegeben werden, welches die genannten Nachteile vermeidet.

Die erfindungsgemäße Aufgabe wird durch ein Verfahren nach dem unabhängigen Anspruch 1 und ein Verfahren nach dem unabhängigen Anspruch 2 gelöst. Die abhängigen Ansprüche stellen bevorzugte Ausführungsformen der Erfindung dar.

Die Erfinder sind zu einer Lösung gelangt, bei der die Kick-down-Funktion im Betrieb des Fahrzeugs lediglich bei bestimmten Bedingungen verfügbar, also aktiviert ist und außerhalb des Vorliegens dieser Bedingungen nicht verfügbar, also deaktiviert ist, wobei diese Bedingungen gleichermaßen zur Sicherheit des Fahrzeugführers sowie zur Energieeinsparung des Fahrzeugs beitragen. Insbesondere wird in bestimmten Betriebszuständen den angewendeten Kraftstoffsparmaßnahmen gegenüber der Kick-down-Funktion der Vorzug gegeben, das bedeutet, dass der Anforderungswunsch des Fahrers zum Einschalten der Kick-down-Funktion durch Betätigen eines Schalters oder des Fahrpedals, insbesondere beim Betätigen des Fahrpedals - auch wiederholt - bis in den Endbereich der Fahrpedalstellung (90 Prozent bis 100 Prozent des Endbereichs der maximal möglichen Fahrpedalstellung bei Volllast), um die Kick-down-Funktion einzuschalten, unberücksichtigt bleibt und die Kick-down-Funktion nicht aktiviert wird beziehungsweise deaktiviert bleibt. Demnach ist die Kick-down-Funktion trotz Betätigendes Schalters und/oder des Fahrpedals und unabhängig von der Fahrpedalstellung nicht verfügbar und bleibt damit deaktiviert.

Bei einem erfindungsgemäßen Verfahren zur Einstellung von Schaltpunkten in einem automatisierten Schaltgetriebe oder einem Automatikgetriebe eines durch einen Motor angetriebenen Fahrzeugs, wobei die Schaltpunkte durch Aktivieren einer Kick-down-Funktion zu höheren Motordrehzahlen hin verschoben werden, wird die Kick-down-Funktion entsprechend einem Anforderungswunsch des Fahrers vom Fahrer durch Betätigen eines Schalters und/oder eines Fahrpedals aktiviert, letzteres insbesondere in einem vorgegebenen Endbereich beispielsweise von wenigstens 90, 95 oder 97 Prozent der maximal möglichen Fahrpedalstellung bei Volllast, wenn eine oder mehrere der folgenden Bedingungen vorliegen:
- es ist/wird aktuell ein Gang oberhalb eines vorbestimmten Ganges eingelegt;
- das Fahrzeug hat nach dem Anfahren aus dem Stillstand oder im Betrieb eine vorbestimmte Geschwindigkeit erreicht;
- das Fahrzeug hat nach dem Anfahren aus dem Stillstand eine vorbestimmte Strecke zurückgelegt;
- es ist eine vorbestimmte Zeit nach Anfahren des Fahrzeugs aus dem Stillstand verstrichen;
- die aktuelle Fahrbahnneigung liegt oberhalb einer vorgegebenen Fahrbahnneigung;
- die aktuelle Fahrzeugbeschleunigung liegt unterhalb eines vorbestimmten Beschleunigungswertes des Fahrzeugs;
- das aktuelle Drehmoment der Antriebsräder liegt unterhalb eines vorbestimmten Antriebsdrehmomentes der Antriebsräder;
wohingegen die Kick-down-Funktion entgegen einem Anforderungswunsch des Fahrers trotz Betätigen des Schalters und/oder des Fahrpedals unabhängig von der Stellung des Fahrpedals nicht aktiviert wird, wenn nicht mindestens eine der genannten Bedingungen vorliegt.

Bei der aktuellen Fahrbahnneigung handelt es sich vorzugsweise um eine positive Fahrbahnneigung und somit um eine Steigung. Vorzugsweise wird die Kick-down-Funktion zur verbesserten Bewältigung der Steigung beim Herauffahren eines Berges aktiviert. Hierzu kann die gesamte Masse des Fahrzeugs sowie die einer optionalen Zuladung (zum Beispiel Anhänger) über entsprechende Sensoren erfasst werden. Bei der aktuellen Fahrzeugbeschleunigung handelt es sich vorzugsweise um eine positive Beschleunigung, welche eine Vorwärtsbewegung des Fahrzeugs bewirkt, und nicht um eine negative Beschleunigung, wie sie zum Beispiel beim Bremsen auftritt.

Besonders vorteilhaft ist der vorbestimmte Gang der zweite Vorwärtsgang des Getriebes. Auch wäre jedoch der nächst höhere, also der dritte Gang denkbar, ab dem die Kick-down-Funktion aktiviert wird. Mit Vorteil wird die Kick-down-Funktion durch Betätigen des Schalters und Vorliegen wenigstens einer der genannten Bedingungen, insbesondere dem Vorliegen eines bestimmten Ganges, aktiviert und eine Rückschaltung in einen niedrigeren Gang verhindert. Dies wird insbesondere bei einem niedrigen Gang, beispielsweise dem zweiten Vorwärtsgang des Getriebes angewendet. Hier würde eine Rückschaltung in den nächst niedrigen, also in den ersten Gang keinen Vorteil bringen, da dieser zum einen den Motor drehzahlmäßig stark belastet und andererseits die Grenzgeschwindigkeit für diesen Gang schnell erreicht ist.

Besonders vorteilhaft ist der Schalter mit einem Fahrpedal des Fahrzeugs derart gekoppelt, dass bei Betätigung des Fahrpedals durch den Fahrer auch der Schalter betätigt wird. Insbesondere wird der Schalter erst in einem Endbereich der maximal möglichen Fahrpedalstellung (90 Prozent bis 100 Prozent der Vollgasstellung des Fahrpedals) betätigt. Vorteilhaft ist der Schalter einteilig mit dem Fahrpedal ausgeführt oder dem Fahrpedal derart gegenübergestellt, dass er durch das Fahrpedal betätigt wird. Bevorzugt wird die Betätigungsarbeit, welche sich aus dem Produkt der Betätigungskraft und des Betätigungsweges (Differenz der Fahrpedalstellung vor und nach der Betätigung) ermittelt. Auch ist eine Differenzierung der beiden Produkte möglich, so dass zum einen die Betätigungsleistung beziehungsweise der Impuls, die Geschwindigkeit oder Beschleunigung der Betätigung erfasst oder berechnet wird. Dazu können entsprechende Sensoren vorgesehen sein. Auch Druckaufnehmer sind denkbar.

Mit Vorteil wird die Kick-down-Funktion nach Erreichen einer aktuell gemessenen oder einer ermittelten Beschleunigung aktiviert. Die aktuell gemessene Beschleunigung kann beispielsweise durch entsprechende Sensoren erfasst werden. Weiterhin sind weitere Sensoren denkbar, die eine Soll-Beschleunigung, ausgehend von den Parametern Fahrzeugmasse, Fahrbahnneigung, Drehzahl und Drehrichtung einer Getriebeabtriebswelle beziehungsweise der Räder sowie des Schlupfes zwischen den Rädern aufnehmen. Hierzu können ebenfalls geeignete Sensoren am oder im Getriebe beziehungsweise im Antriebsstrang sowie im gesamten Fahrzeug angebracht sein.

Beispielsweise können geeignete Sensoren auch die Motordrehzahl beziehungsweise das Motormoment sowie den aktuell eingelegten Gang erfassen. Besonders vorteilhaft kann eine Steuereinheit vorgesehen sein, welche ein erfindungsgemäßes Verfahren ausführt, wobei diese über wenigstens eine Leitung in Verbindung mit einer Getriebesteuereinheit stehen kann beziehungsweise in diese integriert sein kann. Alle oder einzelne oben genannte Sensoren können über entsprechende Leitungen in Kommunikationsverbindung mit der Steuereinheit stehen, also dieser zugeordnet sein. Auch kann die Steuereinheit mit anderen Steuergeräten üblicher Fahrzeugassistenzsysteme in Verbindung stehen.

Mit Vorteil können die Grenzwerte der entsprechenden Größen der Bedingungen zum Aktiveren der Kick-down-Funktion (Ganghöhe, verstrichene Zeit, erfasste Strecke, Geschwindigkeit, Beschleunigung, etc.) manuell über eine Schnittstelle in der Steuereinheit außerhalb des Betriebes des Fahrzeugs konfiguriert und an beispielsweise den Einsatzort oder die Betriebsbedingungen des Fahrzeugs angepasst werden. Weiterhin können Visualisierungs- (Monitore, Displays) und Eingabemöglichkeiten (Bedienungstasten, Tastaturen) im Fahrzeug integriert sein, welche an die Schnittstelle der Steuereinheit angeschlossen sind, so dass der Fahrer selber entsprechende Anpassungen an den in der Steuereinheit abgelegten Parametern sowie den Grenzwerten vornehmen kann.

Die Erfindung soll nachfolgend anhand von Ausführungsbeispielen und der beigefügten Figuren exemplarisch erläutert werden.

Es zeigen:
- Figur 1: eine schematisch vereinfachte Darstellung eines Antriebsstranges.
- Figur 2: eine Blockdarstellung eines erfindungsgemäßen Verfahrens zur Einstellung von Schaltpunkten.

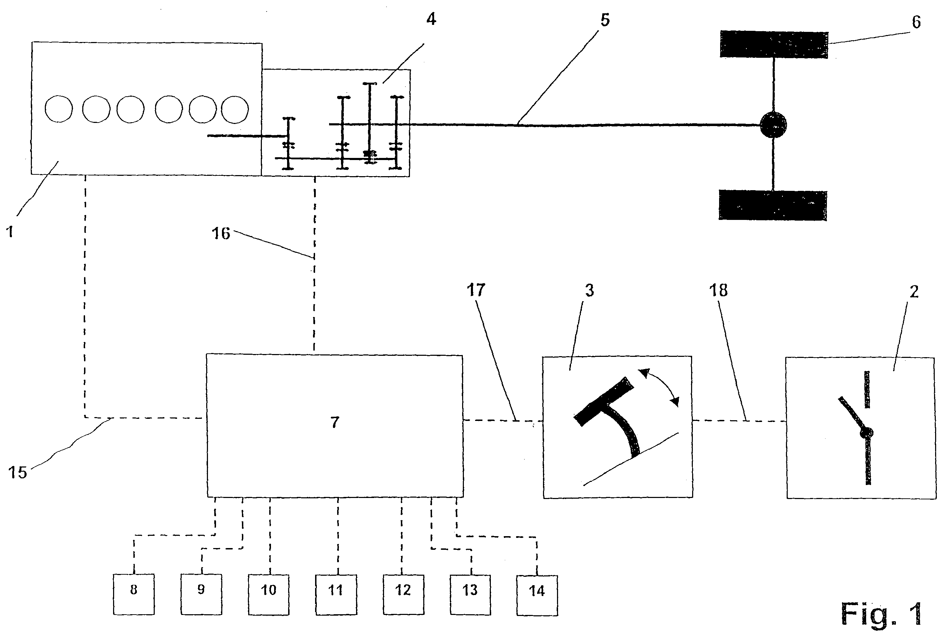

Figur 1 zeigt schematisch vereinfacht die Grundkomponenten eines Fahrzeugantriebsstranges. Dabei wird ein Getriebe 4, vorliegend ein Automatikgetriebe, von einem Motor 1, vorliegend als Verbrennungsmotor ausgeführt, angetrieben. Bei dem Motor 1 kann es sich auch um einen Elektromotor handeln beziehungsweise können einer oder mehrere zusätzliche Elektromotoren in Triebverbindung mit dem Getriebe 2 über eine Getriebeabtriebswelle 5 mit Rädern 6 des Fahrzeugs stehen. Vorliegend wird die vom Motor 1 erzeugte Antriebsleistung über das Getriebe 2 und eine Getriebeabtriebswelle 5 auf die Räder 6 übertragen. Weiterhin ist eine Steuereinheit 7 vorgesehen, welche über Leitungen 15, 16, 17, 18, (gestrichelte Linien) in Verbindung mit dem Motor 1, dem Getriebe 2, einem Fahrpedal 3 sowie einem dem Fahrpedal 3 zugeordneten Schalter 2 in Verbindung steht. Die Steuereinheit 7 umfasst weiterhin eine Vielzahl von Sensoren 8 - 14, wobei Sensor 8 den aktuell eingelegten Gang, Sensor 9 die aktuelle Geschwindigkeit des Fahrzeugs und Sensor 10 die aktuelle Beschleunigung des Fahrzeugs aufnimmt. Sensor 13 erfasst vorliegend das aktuelle Antriebsmoment, die Drehzahl, Drehrichtung sowie den Schlupf der Räder, wohingegen Sensor 14 vorliegend die aktuelle Fahrbahnneigung aufnimmt. Weiterhin kann über einen Sensor 11 die Zeit nach dem Anfahren des Fahrzeugs aus dem Stillstand bestimmt werden. Dieser ist vorliegend somit ein Zähler. Durch den Vergleich einer Sollzeit mit der erfassten Zeit nach Anfahren aus dem Stillstand durch den Sensor 11 kann in der Steuereinrichtung 7 ein Soll-Ist-Vergleich durchgeführt werden und die Kick-down-Funktion aktiviert werden. Ebenso funktioniert auch ein Sensor 15, vorliegend zur Registrierung der vom Fahrzeug zurückgelegten Strecke nach dem Anfahren aus dem Stillstand. Auch hier kann in der Steuereinheit ein Sollwert für eine zurückzulegende Strecke hinterlegt sein oder von dieser in Abhängigkeit der aktuellen Betriebsbedingungen des Fahrzeugs ermittelt beziehungsweise berechnet werden, mit dem der vom Sensor 12 erfasste Wert verglichen wird, wobei bei Übereinstimmung die Kick-down-Funktion aktiviert wird. Selbstverständlich ist es möglich, die vorliegend als durch Sensoren erfasst dargestellten Größen alternativ durch Berechnung aus anderen erfassten oder ebenfalls berechneten Größen zu ermitteln, um einzelne oder auch alle dargestellten Sensoren einzusparen.

Eine Signalleitung 15 vom Motor 1 zur Steuereinheit 7 steht stellvertretend für die Erfassung von den motorkennzeichnenden Betriebszuständen, wie beispielsweise der aktuellen Motordrehzahl, des Motordrehmoments sowie von Zündzeitpunkten bis hin zur Abschaltung einzelner Zylinder können diese Informationen an die Steuereinheit 7 übermittelt werden. Die Steuereinheit 7 kann somit in Kommunikationsverbindung (zum Beispiel über CAN-Bus, bidirektional) mit dem Motor-, Getriebe- oder sonstigen Steuerungen, beispielsweise üblicher Fahrzeugassistenzsysteme (ASR, TCS, ESP, ABS) stehen. Auch kann die Steuereinheit 7 integral mit den genannten Steuergeräten und insbesondere mit der Getriebesteuerung ausgeführt sein.

Vorliegend ist das Fahrpedal 3 mit dem Schalter 2 gekoppelt beziehungsweise steht mit diesem in Wirkverbindung, so dass die Stellung des Schalters 2 proportional ist zur Fahrpedalstellung, besonders im Endbereich. Der Schalter 2 kann ein normaler Ein-/Aus-Schalter sein beziehungsweise unendlich viele Zwischenstellungen aufweisen. Auch kann der Schalter 2 ein Ventil, vorzugsweise ein Proportionalventil sein. Der Schalter 2 kann weiterhin Einrichtungen zur Erfassung des Betätigungsdruckes, der Betätigungsbeschleunigung, der Betätigungsgeschwindigkeit oder des Betätigungsweges des Schalters 2 sowie des mit diesem gekoppelten Fahrpedals 3 umfassen. Denkbar sind hier weitere Sensoren, wie Druckaufnehmer, optische, elektronische, induktive sowie kapazitive Aufnehmer.

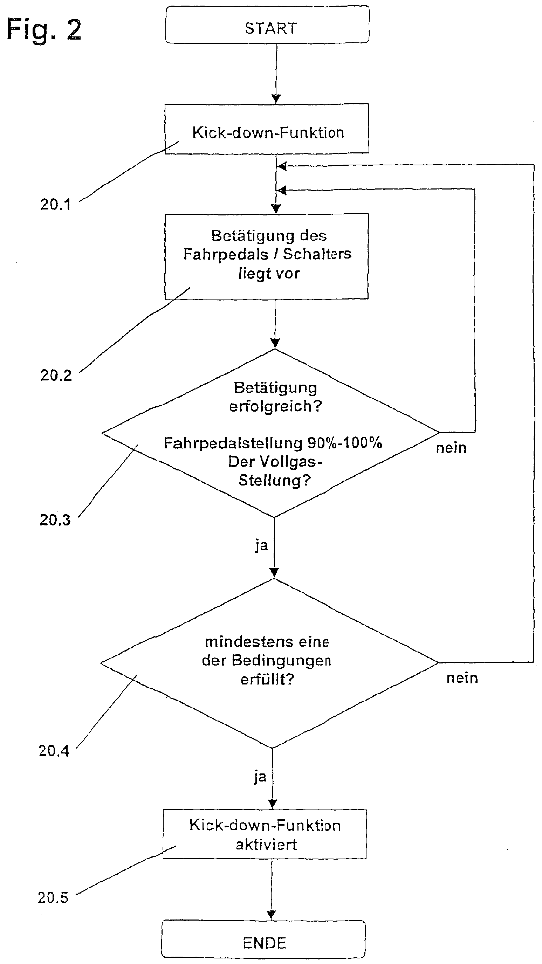

Die Figur 2 veranschaulicht einen Ablaufplan für ein erfindungsgemäßes Verfahren zur Einstellung von Schaltpunkten in einem automatisierten Schaltgetriebe oder einem Automatikgetriebe. Ersichtlich sind die zwischen Start und Ende angeordneten Blöcke 20.1 - 20.5. Der Block 20.1 bezeichnet die Startphase der Überprüfung, ob die Bedingungen für die Kick-down-Funktion vorliegen. Vorliegend können bereits die in der Steuereinheit 7 hinterlegten Grenzwerte für die Bedingungen aus der Steuereinheit 7 herausgelesen werden.

Nachfolgend wird im Block 20.2 die Betätigung des Fahrpedals 3 beziehungsweise des Schalters 2 abgefragt. Vorliegend wird zunächst nur geprüft, ob der Schalter 2 beziehungsweise das Fahrpedal 3 betätigt wurde.

Der sich an den Block 20.2 anschließende Block 20.3 überprüft, ob die Betätigung des Fahrpedals 3 beziehungsweise des Schalters 2 erfolgreich war, ob das Fahrpedal 3 somit im Endbereich der maximalen Fahrpedalstellung (90 - 100 Prozent) betätigt wurde beziehungsweise wenigstens eine gewisse Zeit lang vom Fahrer in diesem Bereich gehalten wurde. Vorliegend kann somit über die Dauer der Betätigung des Fahrpedals in der Vollgasstellung mittels einer Karenzzeit versehentliches oder ungewolltes Betätigen des Fahrpedals bis zum Anschlag durch die Steuereinheit 7 gefiltert und somit die Kick-down-Funktion entsprechend zur Verfügung gestellt werden oder nicht. Auch kann in diesem Verfahrensabschnitt die Stärke der Betätigung (Betätigungsarbeit), der Betätigungsweg sowie die Geschwindigkeit und Beschleunigung der Betätigung von geeigneten Sensoren, wie sie in Figur 1 beschrieben sind, von der Steuereinheit erfasst und verarbeitet werden. Entsprechend dieser eben genannten Betätigungsparameter wird im Anschluss entschieden, ob die Betätigung erfolgreich war, wenn nicht, so wird zwischen den Block 20.1 und 20.2 zurückgesprungen, wobei dann wieder erfasst wird, ob das Fahrpedal 3 beziehungsweise der Schalter 2 betätigt wurde.

War die Betätigung erfolgreich, so werden die nächsten Verfahrensschritte entsprechend dem sich anschließenden Block 20.4 ausgeführt. Hierbei wird geprüft, ob mindestens eine der Bedingungen des erfindungsgemäßen Verfahrens vorliegt. Hierzu werden die Sensoren sowie zusätzlichen Steuergeräte, wie in Figur 1 dargelegt, abgefragt. Ist nicht mindestens eine der genannten Bedingungen trotz Betätigen des Fahrpedals 3 beziehungsweise des Schalters 2 erfüllt, so wird die Kick-down-Funktion nicht aktiviert, es erfolgt ein Rücksprung an den Start des Ablaufs und vorliegend zwischen den Block 20.1 und 20.2.

Ist hingegen mindestens eine der Bedingungen erfüllt, so wird gemäß dem sich anschließenden Block 20.5 die Kick-down-Funktion aktiviert und vorliegend die Schaltpunkte des Getriebes zu höheren Drehzahlen hin verschoben. Vorliegend wird der Verfahrensablauf hiernach beendet.

### Bezugszeichenliste

- 1: Motor
- 2: Schalter
- 3: Fahrpedal
- 4: Getriebe
- 5: Getriebeabtriebswelle
- 6: Räder
- 7: Steuereinheit
- 8: Sensor
- 9: Sensor
- 10: Sensor
- 11: Sensor
- 12: Sensor
- 13: Sensor
- 14: Sensor
- 15: Leitung
- 16: Leitung
- 17: Leitung
- 18: Leitung
- 20.1 - 20.5: Block

## Patentansprüche

1. Verfahren zur Einstellung von Schaltpunkten in einem automatisierten Schaltgetriebe oder einem Automatikgetriebe eines durch einen Motor (1) angetriebenen Fahrzeugs, wobei die Schaltpunkte durch Aktivieren einer Kick-down-Funktion zu höheren Motordrehzahlen hin verschoben werden; **dadurch gekennzeichnet, dass**
1.1 die Kick-down-Funktion entsprechend einem Anforderungswunsch des Fahrers durch Betätigen eines Schalters (2) und/oder eines Fahrpedals (3) aktiviert wird, wenn eine oder mehrere der folgenden Bedingungen vorliegen:
- es ist/wird aktuell ein Gang oberhalb eines vorbestimmten Ganges eingelegt;
- das Fahrzeug hat nach dem Anfahren aus dem Stillstand oder im Betrieb eine vorbestimmte Geschwindigkeit erreicht;
- das Fahrzeug hat nach dem Anfahren aus dem Stillstand eine vorbestimmte Strecke zurückgelegt;
- es ist eine vorbestimmte Zeit nach Anfahren des Fahrzeugs aus dem Stillstand verstrichen;
- die aktuelle Fahrbahnneigung liegt oberhalb einer vorgegebenen Fahrbahnneigung;
- die aktuelle Fahrzeugbeschleunigung liegt unterhalb eines vorbestimmten Beschleunigungswertes des Fahrzeugs;
- das aktuelle Drehmoment der Antriebsräder liegt unterhalb eines vorbestimmten Antriebsdrehmomentes der Antriebsräder;
wohingegen die Kick-down-Funktion entgegen einem Anforderungswunsch des Fahrers trotz Betätigen des Schalters (2) und/oder trotz Betätigen des Fahrpedals (3) unabhängig von der Stellung des Fahrpedals (3) nicht aktiviert wird, wenn nicht mindestens eine der genannten Bedingungen vorliegt.

2. Verfahren gemäß Anspruch 1, **dadurch gekennzeichnet, dass** die Kick-down-Funktion durch Betätigen des Schalters (2) und/oder des Fahrpedals (3) und Vorliegen wenigstens einer der genannten Bedingungen, insbesondere dem Vorliegen eines vorbestimmten Ganges, aktiviert wird und eine Rückschaltung in einen niedrigeren Gang verhindert wird.

3. Verfahren gemäß Anspruch 1 oder 2, **dadurch gekennzeichnet, dass** der Schalter mit dem Fahrpedal (3) des Fahrzeugs derart gekoppelt ist, dass bei Betätigung des Fahrpedals (3) durch den Fahrer, insbesondere in einem Endbereich der maximal möglichen Fahrpedalstellung auch der Schalter (2) betätigt wird.

4. Verfahren gemäß Anspruch 3, **dadurch gekennzeichnet, dass** die Kick-down-Funktion bei Vorliegen der aktuellen Fahrpedalstellung oder Schalterstellung im Bereich von 90 Prozent bis 100 Prozent des Endbereichs der maximal möglichen Fahrpedalstellung oder Schalterstellung bei Volllast aktiviert wird.

5. Verfahren gemäß einem der Ansprüche 1 bis 4, **dadurch gekennzeichnet, dass** die Kick-down-Funktion nach Erreichen einer aktuell gemessenen oder einer ermittelten Beschleunigung, wobei diese insbesondere aus der Fahrzeugmasse, Fahrbahnneigung sowie dem aktuellen Motordrehmoment berechnet wird, aktiviert wird.

6. Verfahren gemäß einem der Ansprüche 3 bis 5, **dadurch gekennzeichnet, dass** die Betätigungsgeschwindigkeit, Betätigungsbeschleunigung und/oder der Betätigungsdruck des Fahrpedals (3) und/oder des Schalters (2) erfasst wird und die Kick-down-Funktion oberhalb eines bestimmten Grenzwertes der entsprechenden Größe aktiviert wird.

## Claims

1. Method for setting shift points in an automated transmission or an automatic transmission of a vehicle which is driven by an engine (1), wherein the shift points are adjusted toward relatively high engine speeds by activating a kick-down function;
**characterized in that**
1.1 the kick-down function is activated in accordance with a request by the driver by activating a switch (2) and/or an accelerator pedal (3) if one or more of the following conditions is/are met:
- a gear speed above a predetermined gear speed is currently engaged or being engaged;
- the vehicle has reached a predetermined speed after starting from the stationary state or during operation;
- the vehicle has travelled for a predetermined distance after starting from the stationary state;
- a predetermined time after the starting of the vehicle from the stationary state has passed;
- the current inclination of the carriageway is above a predefined inclination of the carriageway;
- the current acceleration of the vehicle is below a predetermined acceleration value of the vehicle; and
- the current torque of the driven wheels is below a predetermined drive torque of the driven wheels;
whereas the kick-down function is not activated counter to a request of the driver despite activation of the switch (2) and/or despite activation of the accelerator pedal (3), irrespective of the position of the accelerator pedal (3), if at least one of the specified conditions is not met.

2. Method according to Claim 1, **characterized in that** the kick-down function is activated by activating the switch (2) and/or the accelerator pedal (3) and by at least one of the specified conditions being met, in particular by a predetermined gear speed being present, and shifting down into a relatively low gear speed is prevented.

3. Method according to Claim 1 or 2, **characterized in that** the switch is coupled to the accelerator pedal (3) of the vehicle in such a way that when the accelerator pedal (3) is activated by the driver, in particular in an end range of the maximum possible accelerator pedal position, the switch (2) is also activated.

4. Method according to Claim 3, **characterized in that** the kick-down function is activated when the current accelerator pedal position or the switch position is in the range of 90 percent to 100 percent of the end range of the maximum possible accelerator pedal position or switch position in the case of full load.

5. Method according to one of Claims 1 to 4, **characterized in that** the kick-down function is activated after a currently measured or a determined acceleration is reached, wherein said acceleration is calculated, in particular, on the basis of the vehicle mass, inclination of the carriageway and the current engine torque.

6. Method according to one of Claims 3 to 5, **characterized in that** the activation speed, activation acceleration and/or the activation pressure of the accelerator pedal (3) and/or of the switch (2) is detected, and the kick-down function is activated above a specific limiting value of the corresponding variable.

## Revendications

1. Procédé d'ajustement de points de changement de vitesse dans une boîte de vitesses automatisée ou une boîte de vitesses automatique d'un véhicule entraîné par un moteur (1), les points de changement de vitesse étant déplacés par actionnement d'une fonction de pied au plancher vers les plus hauts régimes du moteur ; **caractérisé en ce que**
1.1 la fonction de pied au plancher est activée en fonction d'un souhait de commande du conducteur par actionnement d'un commutateur (2) et/ou d'une pédale d'accélération (3), lorsqu'une ou plusieurs des conditions suivantes sont satisfaites :
- un rapport au-dessus d'un rapport prédéterminé est actuellement enclenché/en cours d'enclenchement;
- le véhicule a atteint, après le démarrage à partir de l'état d'arrêt ou pendant le fonctionnement, une vitesse prédéterminée ;
- le véhicule a parcouru, après le démarrage à partir de l'état d'arrêt, une distance prédéterminée ;
- un temps prédéterminé s'est écoulé après le démarrage du véhicule à partir de l'état d'arrêt ;
- l'inclinaison actuelle de la route est au-dessus d'une inclinaison prédéfinie de la route ;
- l'accélération actuelle du véhicule est en dessous d'une valeur d'accélération prédéterminée du véhicule ;
- le couple actuel des roues motrices est en dessous d'un couple d'entraînement prédéterminé des roues motrices ;
tandis que la fonction de pied au plancher n'est pas activée contrairement à un souhait de commande du conducteur, malgré l'actionnement du commutateur (2) et/ou malgré l'actionnement de la pédale d'accélération (3) indépendamment de la position de la pédale d'accélération (3) lorsqu'il n'y a pas au moins l'une desdites conditions présente.

2. Procédé selon la revendication 1, **caractérisé en ce que** la fonction de pied au plancher est activée par actionnement du commutateur (2) et/ou de la pédale d'accélération (3) et en présence d'au moins l'une desdites conditions, en particulier en présence d'un rapport prédéterminé, et un rétrogradage à un rapport inférieur est empêché.

3. Procédé selon la revendication 1 ou 2, **caractérisé en ce que** le commutateur est accouplé à la pédale d'accélération (3) du véhicule de telle sorte que lors de l'actionnement de la pédale d'accélération (3) par le conducteur, en particulier dans une région de fin de course de la position maximale possible de la pédale d'accélération, le commutateur (2) est également actionné.

4. Procédé selon la revendication 3, **caractérisé en ce que** la fonction de pied au plancher est activée en présence de la position actuelle de la pédale d'accélération ou du commutateur dans une plage de 90 % à 100 % de la région de fin de course de la position maximale possible de la pédale d'accélération ou de la position du commutateur en cas de pleine charge.

5. Procédé selon l'une quelconque des revendications 1 à 4, **caractérisé en ce que** la fonction de pied au plancher est activée après l'obtention d'une accélération actuellement mesurée ou d'une accélération déterminée, celle-ci étant calculée notamment à partir de la masse du véhicule, de la pente de la route ainsi que du couple actuel du moteur.

6. Procédé selon l'une quelconque des revendications 3 à 5, **caractérisé en ce que** la vitesse d'actionnement, l'accélération d'actionnement et/ou la pression d'actionnement de la pédale d'accélération (3) et/ou du commutateur (2) sont détectées et la fonction de pied au plancher est activée au-dessus d'une valeur limite déterminée de la grandeur correspondante.
